# EUROPEAN PATENT SPECIFICATION

(11) **EP 0 282 601 B1**
(45) Date of publication and mention of the grant of the patent: **10.02.1993**
(21) Application number: 87906096.0
(22) Date of filing: 16.09.1987
(51) Int. Cl.: G01N 35/02, G01N 21/75

(54) **AUTOMATIC ANALYZER**
AUTOMATISCHER ANALYSATOR
ANALYSEUR AUTOMATIQUE

(30) Priority: 16.09.1986 JP 216011/86; 19.09.1986 JP 219174/86; 03.10.1986 JP 234295/86; 19.01.1987 JP 8112/87; 12.02.1987 JP 17750/87 U
(43) Date of publication of application: 21.09.1988
(73) Proprietor: MITSUBISHI CORPORATION, Chiyoda-ku Tokyo 100 (JP)
(72) Inventor: WAKATAKE, Koichi, Koganei-shi Tokyo 184 (JP)
(74) Representative: Glawe, Delfs, Moll & Partner
(86) International application number: PCT/JP87/00679
(87) International publication number: WO 88/02120

(56) References cited:
- DE-A- 3 346 532
- JP-A- 5 752 996
- JP-A-60 117 386
- JP-B- 5 936 227
- JP-U- 5 739 357
- US-A- 4 169 125
- US-A- 4 315 891

## Description

### TECHNICAL FIELD

This invention relates to an automatic analyzer operating automatically for biochemical analysis and immunological analysis.

### BACKGROUND ART

Various kinds of automatic analyzers have ever been proposed, however, many of the recent automatic analyzers are rather complicated, large-sized, high-costed and high-speed operating, and moreover, involve an exceedingly complicate operation, therefore a specialized operator must be attendant thereon all the time, thus personnel expenses running up to a problem.

Then, this kind of large-sized automatic analyzer is not inevitably required by local hospitals and clinics where so much blood examination is not necessary, and thus the existing condition is that the specialized examination center is requested for blood examination of respective patients.

In case, consequently, where an urgent examination is required, an inconvenience may result with such local hospitals and clinics, and a waste of cost is quite unavoidable, moreover, in case a work for comparing an analysis data with the patient's blood or reexamination is required, a long time will be needed for obtaining a result.

An automatic analyzer according to the preamble of claim 1 is disclosed in US-A-4315 891. Any means for controlling or operating the apparatus are not described in this document.

From JP-A-60 117 386 it is known to use an IC card to control a machine and to read out informations from this machine.

It is the object of the invention to provide a simple automatic analyzer, miniaturized to cope with a need by local hospitals and clinics which is very simple in operation and construction and moderate in costs.

This object is achieved by an automatic analyzer as defined in claim 1.

According to the invention, the IC card comprises a starting IC card in which command signals for actuating and controlling organically a sample moving means, a sampling means, a reaction cell moving means, a reagent pouring means, a reagent container moving means, a reagent pouring means, an optical measuring means and washing means are inputted, and a memory IC card storing data measured by the optical measuring means. Needless to say, the IC card may be so constructed as to work for both starting and memory at the same time.

In an embodiment of the invention, a thermostat comprises a plurality of heating members at predetermined intervals on the bottom of a thermostatic oven constituted of a heating medium, heating temperature in the thermostatic oven uniformly by controlling the heating members separately for temperature by a temperature controller.

In a development of the invention, a table holding the reaction cells thereon turns in step by the number one cell less than the number of the reaction cells held on the table so that the reaction cells will be moved intermittently counter to the direction in which the table turns, thus moving the reaction cells one by one intermittently counter to the direction in which the table turns as mentioned.

### BRIEF DESCRIPTION OF THE DRAWINGS

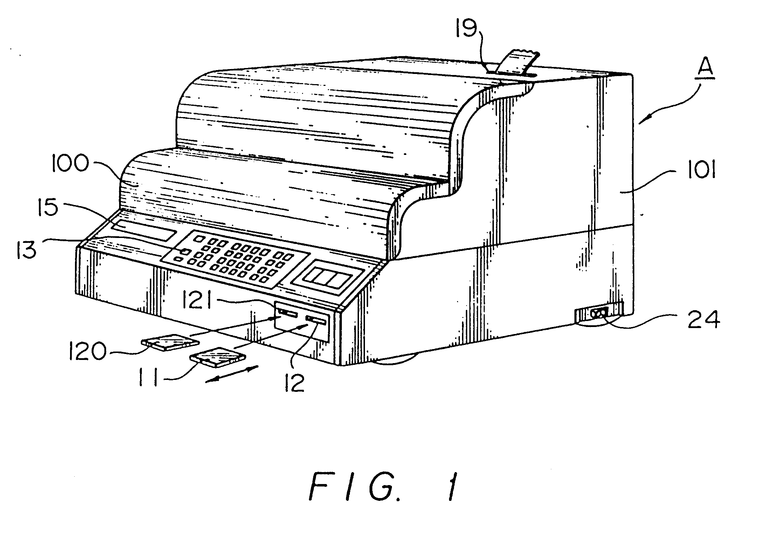

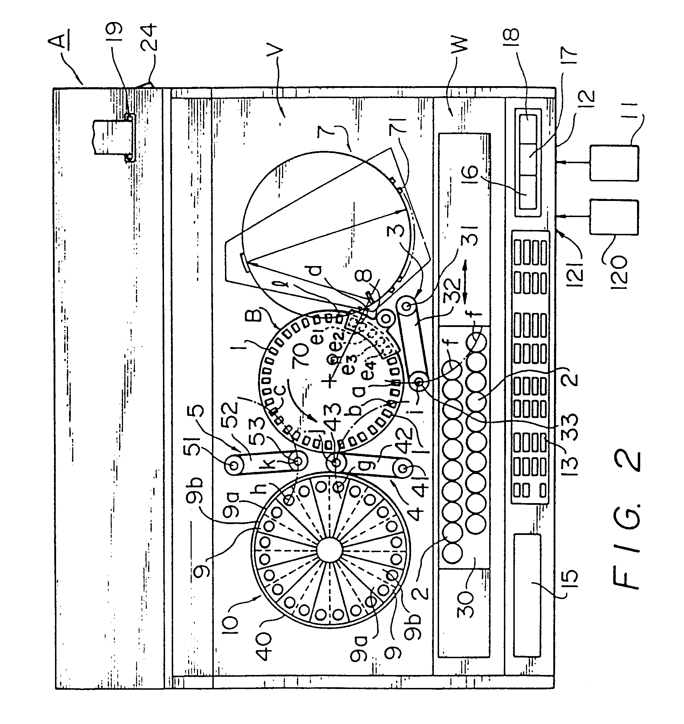

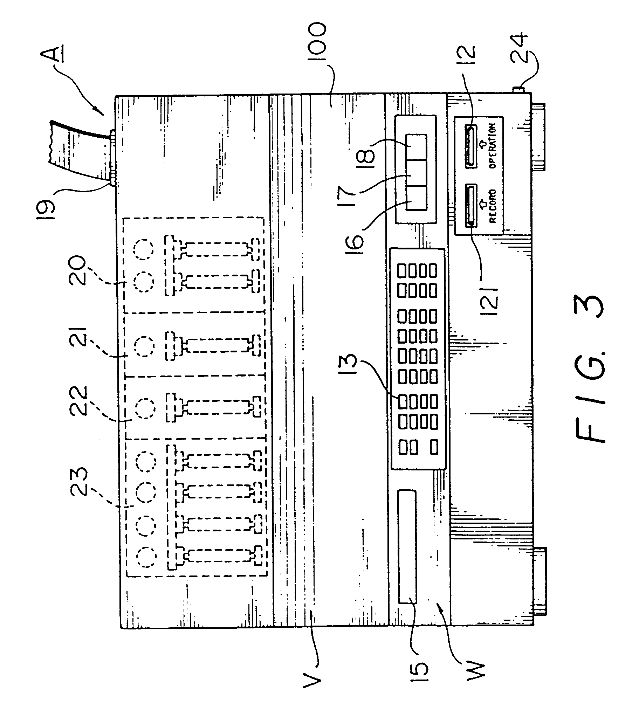

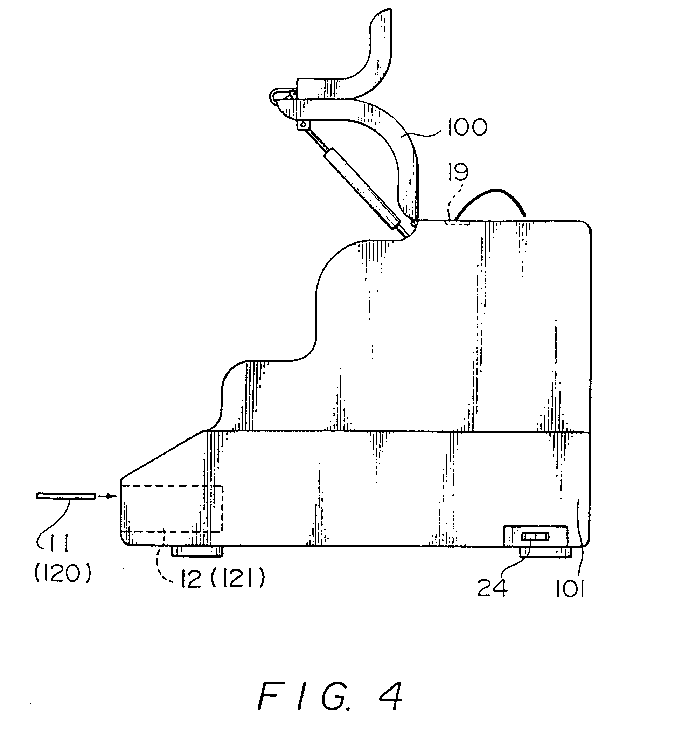

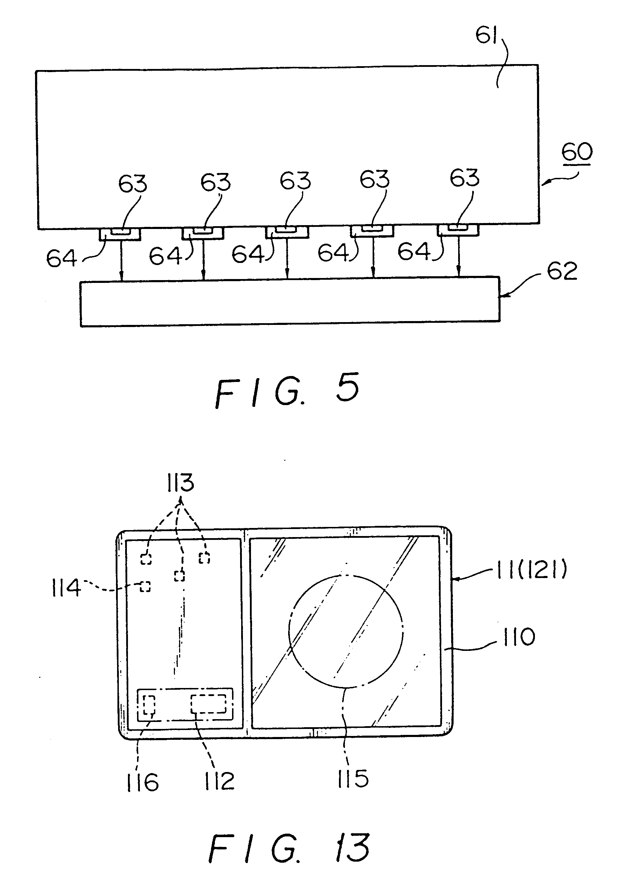

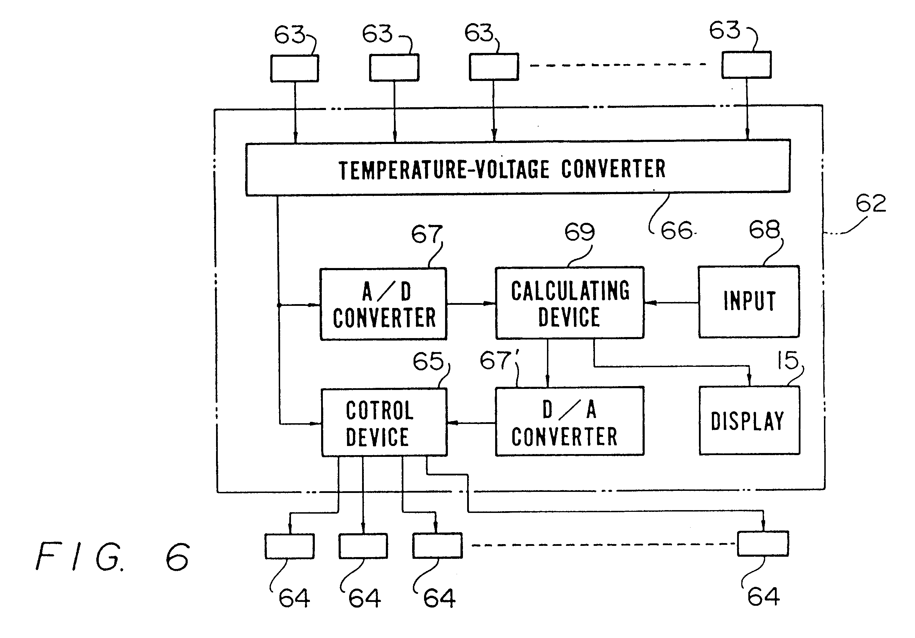

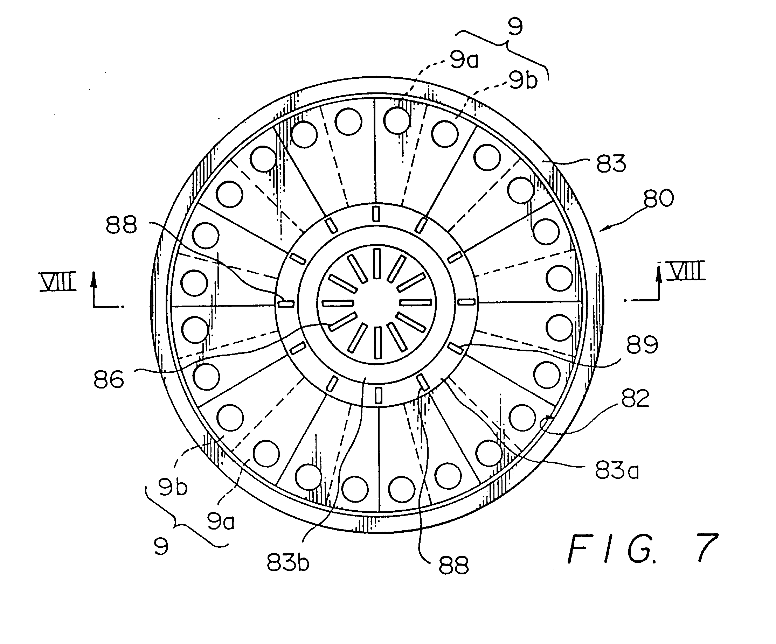

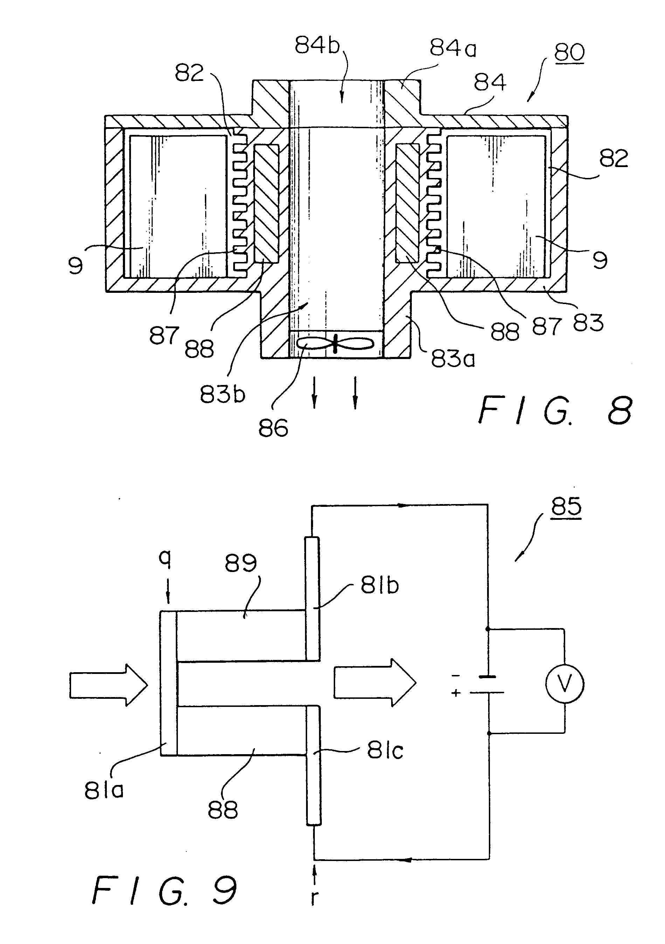

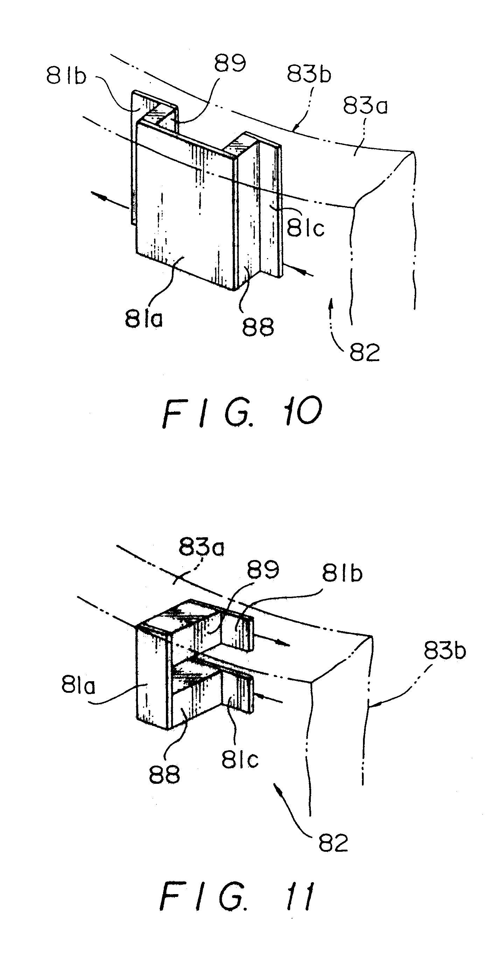

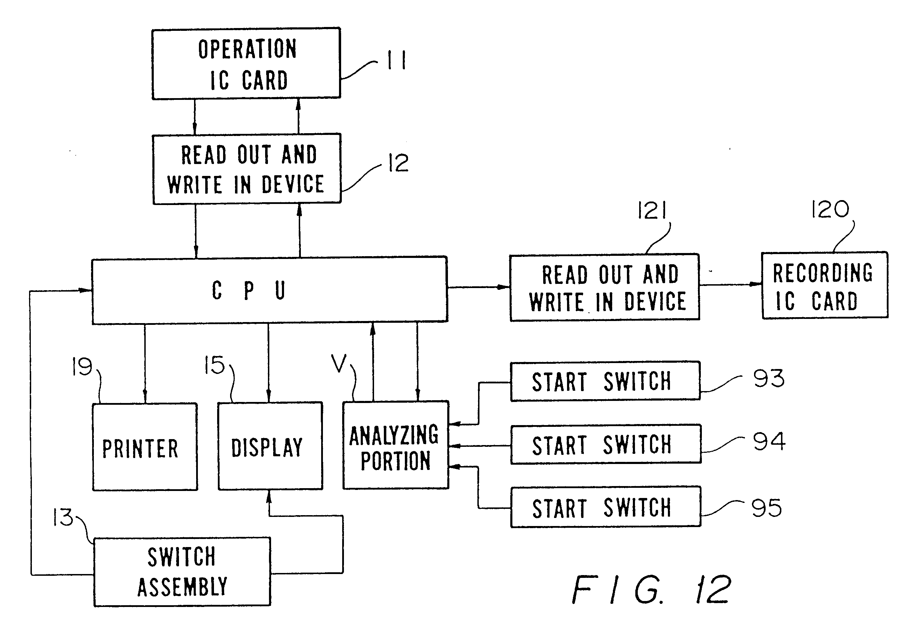

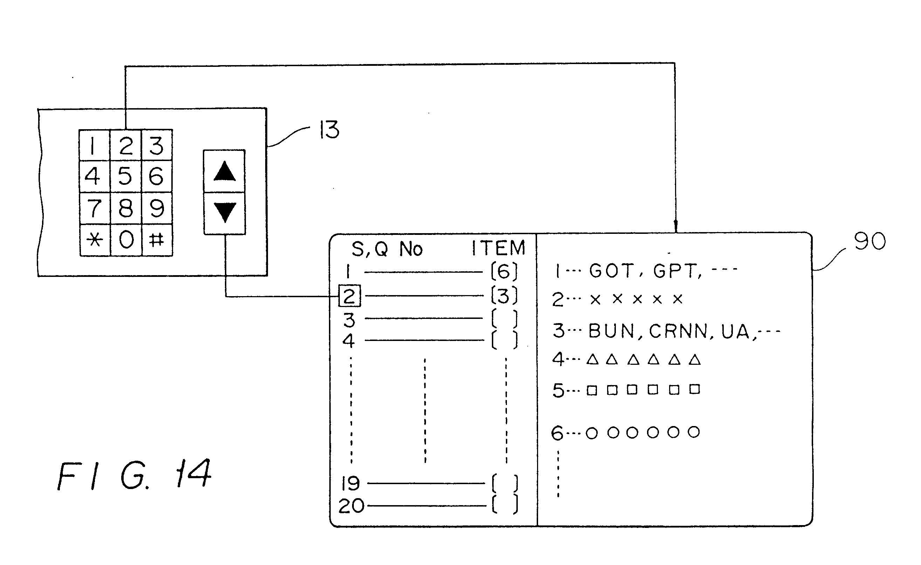

Fig. 1 is a perspective view showing a general construction of an automatic analyzer given in one embodiment of the invention; Fig. 2 is a plan view showing a construction of the automatic analyzer schematically; Fig. 3 is a front view of the automatic analyzer; Fig. 4 is a right side view of the automatic analyzer; Fig. 5 is an explanatory drawing showing a schematic construction of a thermostat; Fig. 6 is a block diagram showing a construction of a heat regulating block; Fig. 7 is a plan view of a liquid cooling device; Fig. 8 is a sectional view taken on line VIII - VIII of Fig. 7; Fig. 9 is a schematic block diagram of an electronic cooling unit; Fig. 10 is a fragmentary enlarged view showing an example of array of N type semiconductor and P type semiconductor; Fig. 11 is a fragmentary enlarged view showing another example of array of N type semiconductor and P type semiconductor; Fig. 12 is a flowchart showing a construction of the automatic analyzer; Fig. 13 is an explanatory drawing showing one example of IC card; Fig. 14 is an explanatory drawing showing one example of display on a display unit.

### BEST MODE FOR CARRYING OUT THE INVENTION

The invention will now be described in detail with reference to the accompanying drawings representing one preferred embodiment thereof.

As shown in Fig. 1 to Fig. 4 and Fig. 12, a simple automatic analyzer A relating to the invention comprises roughly an analyzing portion V and a controlling portion W.

The analyzing portion V comprises a reaction cell moving device for moving a reaction cell 1 at a predetermined timing to a sample (serum) pouring position a, a first reagent pouring position b, a second reagent pouring/stirring position c, an optical measuring position d and washing positions e₁ to e₄, a sample container in which a sample (serum) to be measured is contained as required in quantity, a sample container moving device (not indicated) for moving the sample container 2 linearly to a sample sucking position f, a sampling pipet 3 for sucking in a necessary quantity of sample in the sample container 2 and pouring it dividedly into the reaction cell 1, a first reagent pipet 4 for pouring a first reagent corresponding to the measuring item dividedly into the reaction cell 1, a second reagent pipet 5 for pouring a second reagent corresponding to the measuring item into the reaction cell 1, a stirring device (not indicated) interlocking with the second reagent pipet 5, an optical measuring device 7, a washing device 8, a reagent moving device 10 for moving a reagent bottle 9 in which the first and second reagents are contained to a first reagent sucking position g or a second reagent sucking position h.

On the other hand, the controlling portion W comprises CPU for controlling a drive of the aforementioned devices correspondingly to the measuring items, a starting IC card 11 ready for reading and writing, a reader/writer 12 on which the starting IC card 11 is installed, a switch group 13 for selecting the analyzing items corresponding to a sample No., a sequential No. and a specified sample No. or sequential No., a display unit 15, a start switch 16, a stop switch 17, a reset switch 18, a memory IC card 120 storing and ready for reading and writing data obtained by the optical measuring device 7, a reader/writer 121 on which the memory IC card 120 is installed, a printer 19 for printing out measuring results and so forth. Then, a reference numeral 100 in the drawings denotes a double closing cover mounted rotatably on a case body 101, a reference numeral 20 in Fig. 3 denotes a sampling pump, 21 denotes a first reagent pump, 22 denotes a second reagent pump, 23 denotes a washing pump, and 24 in Fig. 4 denotes a main switch.

The reaction cell moving device B moves a plurality (36 pieces) of reaction cells 1 held on a reaction cell table (not indicated) one pitch by one intermittently and successively to required positions as heating up to almost biological temperature (37 °C) on a thermostat 60 described hereinlater. The reaction cells 1 turn in step counter (counterclockwise in Fig. 2) to the direction (clockwise in Fig. 2) moved intermittently by the number (for 35 cells) one cell less, thus moving the reaction cells 1 one by one intermittently clockwise in Fig. 2 in consequence, which is the direction counter to the turn in step. A well-known pulse motor is used as the reaction cell moving means.

The sample container 2 is held in a sample cassette 30 in two rows per 10 pieces or in 20 pieces all told, and shaft centers of the containers first, second, third, ... tenth from the right of each row are set so as to come on a path of rotation of the sampling pipet 3.

The sample cassette 30 holding the sample containers 2 therein as mentioned has the sample containers 2 moved intermittently and successively to the sample sucking position f by the sample container moving device consisting of a cross feed motion.

As in the case of a well-known sampling pipet, the sampling pipet 3 comprises an arm 32 with its one end journaled in a shaft 31, a pipet 33 disposed on the other end of the arm 32, a sampling pump 20 connected through to the pipet 33 and sucking in the sample as required in quantity to discharge to the reaction cells 1, a driving device (not indicated) for turning the arm 32 from the sample sucking position to the sample pouring position a and further to a washing position i at a predetermined timing and then lifting it at each position.

The sample measuring system then comprises filling a suction system with water, sucking in the sample to measurement as isolated from water through air, discharging the sample only then, and washing the pipet 33 inside with a washing water led therethrough. In this case, the pipet 33 is set, needless to say, at the pipet washing position i, and hence the sample sticking on an outer surface of the pipet 33 is washed down at the position i.

The thermostat 60 comprises, as shown in Fig. 5, a heating medium 61 mounted on a thermostatic oven (not indicated) in which a lower portion of the reaction cell 1 soaks, a constant temperature controller 62 disposed on the heating medium 61.

The constant temperature controller 62 comprises, as shown in Fig. 6, a plurality of temperature detecting elements 63 for detecting temperature at each position of the heating medium 61, a plurality of heating elements 64, a temperature control device 65 for controlling the heating elements 64 according to a temperature information obtained through the temperature detecting elements 63.

The temperature detecting element 63 is constituted of a thermistor and others and is mounted plurally on a bottom portion of the thermostatic oven separately at predetermined intervals.

The temperature information obtained through each temperature detecting element 63 has its variation of resistance value converted into voltage by a temperature-voltage converter 66, and an output from the temperature-voltage converter 66 is inputted to the temperature control device 65 for controlling voltage and current to the heating elements 64. Further, the temperature-voltage converter 66 has its output voltage converted into a digital value by an A/D converter 67, an output from the A/D converter 67 and an output from an input device 68 are processed by an arithmetic operation processing circuit 69, and a result thus obtained is converted into an analogue value by a D/A converter 67' and inputted to the temperature control device 65.

Then, the aforementioned heating element 64 is constituted of a heater utilizing a heat generated by a resistance wire. Further, the temperature control device 65 operates for unifying temperature at each mounting position of the heating medium 61 by subjecting each heating element 64 to on/off control according to information from a temperature detecting element 63.

Therefore, when temperature information corresponding to a set temperature is inputted to the input device 68, an output from the input device 68 is inputted to the aforementioned arithmetic operation processing unit 69, and a corresponding resistance value (for generating a heating power necessary for liquid to be heated and so retained at 37 °C) in each temperature detecting element 63 is obtained according to a predetermined arithmetic expression. On the other hand, a change in resistance value of each temperature detecting element 63 is converted into voltage by the temperature-voltage converter 66, converted further into a digital signal by the A/D converter 67, and the digital value is inputted to the arithmetic operation processing unit 69. The arithmetic operation processing unit 69 operates for the aforementioned arithmetic processing according to a conversion coefficient determined by the temperature-voltage converter 66, a result of the operation is output to the D/A converter 67', and the D/A converter 67' generates a comparison voltage. That is, the D/A converter 67' compares an output voltage from the temperature-voltage converter 66 with the output voltage of the D/A converter 67' generating the aforementioned comparison voltage, the temperature control device 65 controls voltage and current to each temperature detecting element 63 according to the comparison information, thus heating a liquid in the thermostatic oven uniformly.

From constructing the thermostat 60 as mentioned, a temperature distribution in the thermostat is easily made uniform, and a chemical reaction of the sample with the reagent can be equalized.

The reagent moving device 10 comprises, as shown in Fig. 2 and Fig. 7, the reagent bottle 9 having a cell 9a in which a first reagent is enclosed and another cell 9b in which a second reagent is enclosed, the bottle moving device (not indicated) turning and controlling a table 40 on which the reagent bottle 9 is placed and moving a reagent corresponding to the measuring item to the first reagent sucking position g or the second reagent sucking position h, the first reagent pipet 4 for sucking the first reagent corresponding to the measuring item as required in quantity from inside the cell 9a at the first reagent sucking position g, the second reagent pipet 5 for sucking the second reagent corresponding to the measuring item as required in quantity from inside the cell 9b at the second reagent sucking position h. Then, the reagent bottle 9 disposed on the table 40 is set at a predetermined position, and the position is stored in CPU. Further, the reagent bottle 9 is constituted to have these 12 containers arranged in one set, and where the measuring item varies, the one set is ready for replacing with another set. Then, a reagent in the reagent bottle 9 is cooled down to 10 to 12 °C on a liquid cooling device 80.

The liquid cooling device 80 comprises, as shown in Fig. 7 to Fig. 10, a heat insulating case 83 circular in plan which is provided with a plurality of chambers 82 for containing the reagent bottle 9 radially therein, a cover 84 installed detachably on an upward opening of the heat insulating case 83, an electronic cooling unit 85 disposed on a center cylindrical part 83a of the heat insulating case 83, a fan 86 for purging forcedly a heat generated in the electronic cooling unit 85 externally.

The heat insulating case 83 is constituted of a heat insulating material, and comb-toothed radiation fins 87, 87 are formed on chamber side of the center cylindrical part 83a as shown in Fig. 8.

As in the case of the aforementioned heat insulating case 83, the cover 84 is formed circularly in plan, a void 84b communicating with a central void 83b of the heat insulating case 83 is formed at the central portion thereof, and a peripheral wall portion 84a of the void 84b is projected upward to form a grip. Then, a plurality of openings (not indicated) communicating with holes (not indicated) for sucking liquid in the reagent bottle 9 contained in the heat insulating case 83 are provided on the cover 84 at positions corresponding thereto.

The electronic cooling unit 85 is constructed fundamentally such that, as shown in Fig. 9, an n-type semiconductor 88 and a p-type semiconductor 89 formed of two different materials are joined together through metals 81a, 81b, 81c, and when DC current is carried from a supply, for example, in the direction indicated by an arrow in Fig. 9, a junction q joined through the metal 81a becomes cool according to an endothermic effect, a junction r joined through the metals 81b, 81c becomes hot according to a heating effect, thus working Peltier effect.

Accordingly, as shown in Fig. 10, the n-type semiconductor 88 and the p-type semiconductor 89 are arrayed alternately in the direction circumferential of the center cylindrical part 83a, the chamber sides of the pair of n-type semiconductor 88 and p-type semiconductor 89 are connected through the metal 81a, and the metals 81b, 81c are connected in DC current each to the center void side of the n-type semiconductor 88 and the p-type semiconductor 89, thereby obtaining a low-temperature domain on the chamber side through an endothermic effect and a high-temperature domain on the center void side.

Then, as another method for arraying the n-type semiconductor 88 and the p-type semiconductor 89, as shown in Fig. 11, the pair of n-type semiconductor 88 and p-type semiconductor 89 are disposed longitudinally of the center cylindrical part 83a, the chamber sides of the pair of n-type semiconductor 88 and p-type semiconductor 89 are connected through the metal 81a, the metals 81b, 81c are connected to the center void sides of the n-type semiconductor 88 and the p-type semiconductor 89 respectively, and such set is arrayed plurally on the center cylindrical part 83a in the direction circumferential thereof and then the sets are connected in DC current each other, thus obtaining a low-temperature domain on the chamber side through an endothermic effect and a high-temperature domain on the center void side.

Needless to say, Peltier effect may be reversible by reversing the direction in which DC current flows, and a similar effect will be obtainable from forming the n-type semiconductor 88 and the p-type semiconductor 89 of an n-type conductor and a p-type conductor respectively.

A cold air thus generated on the junction q is introduced to the chamber 82 from a radiation fin 87, and a hot air generated on the junction r is exhausted forcedly outside the cooling device, thereby cooling down a liquid in the reagent bottle 9 contained in the chamber 2 efficiently.

Then, the liquid cooling temperature can be set arbitrarily by regulating voltage of the DC current. Needless to say, a heat generated on the junction r can be used, for example, for preliminary heating of the sample.

From constructing the liquid cooling device as described, an evaporator, a condenser and a long passage for guiding cold air are not required unlike a conventional liquid cooling device, the device can sharply be miniaturized, and cold air can be sent directly to the cells, thus enhancing a cooling efficiency at the same time.

When the reagent bottle 9 corresponding to the measuring item arrives at predetermined reagent sucking positions g, h, the reagent is poured dividedly into the reaction cells 1 by the first and second reagent pipets 4, 5.

As in the construction of a known pipet device, the first and second reagent pipets 4, 5 comprise arms 42, 52 with one end journaled in shafts 41, 51 each, pipets 43, 53 disposed on the other ends of the arms 42, 52, pumps 21, 22 connected through to the pipets 43, 53 and sucking in a necessary quantity of the reagent to discharge into the reaction cell 1, each driving device (not indicated) for turning the arms 42, 52 from the reagent sucking positions g, h to the reagent pouring positions b, c and further to the washing positions j, k at a predetermined timing and controlling a lifting at each position.

In measuring the reagent, a suction system is filled with water, the reagent and water are separated each other through air to suction and measurement, the reagent only is then discharged, and a washing water is poured from inside thereafter to wash the interior of the pipets 43, 53. When washing, the pipets 43, 53 are set at the pipet washing positions j, k, and the sample and others sticking on outer surfaces of the pipets 43, 53 are washed at the positions j, k.

While not indicated, the stirring device is fixed on the second reagent pipet 5, moved according as the arm 52 is turned, bubbles the sample in the reaction cell 1 immediately after the second reagent is poured, and is then washed together with the second reagent pipet 5 at the pipet washing position k.

The optical measuring device 7 forming a detecting unit or observation point is constructed in a diffraction grating system, comprising a light source 70, a plurality of light receiving elements 71 with a measuring light irradiated from the light source 70 arrayed on Rowland circle, the aforementioned CPU for converting the quantity of light received on the light receiving element 71 corresponding to a measuring item into voltage and processing the value obtained through analysis, a memory (not indicated) for storing the data. Needless to say, the optical measuring device 7 may be applied from changing into a wave-length conversion system through a filter.

Accordingly, the optical measuring device 7 operates for measuring continuously all the reaction cells 1 (35 all told in the illustrated embodiment) from the washing position e₁ to a measurement closing position ℓ, thus obtaining a reaction time course of each reaction cell 1.

The washing device 8 washes the interior of the reaction cell 1 for which the optical measuring work is over for reservice, comprising a known liquid suction motion and a washing water feed motion.

Known readable/writable IC cards are used for the starting IC card 11 for driving and controlling an automatic analyzer A constructed as above and the memory IC card 120 for storing measuring data.

As exemplified in Fig. 13, a data storage 112 operating on integrated circuit is buried in a card substrate 110, thereby interchanging information with the reader/writer units 12, 121.

That is, the starting IC card 11 and the memory IC card 120 are provided basically with a light receiving element 113 for receiving optical signals according to data signals sent from the reader/writer units 12, 121 buried in the card substrate 110 and transmitting them to the data storage 112, a light emitting element 114 for converting data signals generated from the reader/writer units 12, 121 buried in the aforementioned card substrate 110 and sending them to the reader/writer units 12, 121, a driving power supply 115 for generating driving voltages for the data storage 112 and the light receiving element 113 buried in the card substrate 110.

Then, the starting IC card 11 and the memory IC card 120 have CPU constituting the data storage 112 which is not illustrated, an integrated circuit forming a data store part, a plurality of light receiving elements consisting of a photo transistor for receiving a crystal oscillation signal sent as optical signal from the reader/writer units 12, 121, a data input signal and a reset signal, a light emitting element consisting of a light emitting diode for converting a data output signal from the integrated circuit into an optical signal and outputting it to the reader/writer units 12, 121, a driving power supply such as mercury cell or the like arrayed within the card substrate 110 formed of a synthetic resin such as polyester, vinyl chloride or the like at predetermined positions.

The aforementioned integrated circuit is constituted of E-EPROM (Electrical Erasable Programmable Read Only Memory) not only readable but also rewritable electrically, wherein a drive controlling means coordinating with a plurality of grouped analysis items is inputted, for example, for six groups as shown in Fig. 14, and also various data such as name, registration No., office, post and others of operators using the automatic analyzer A are inputted.

The analysis items may be grouped by dividing only such items as are necessitated by facilities to install properly into a plurality of groups, however, in consideration of a construction of the automatic analyzer and other factors, it is preferable that the items be grouped by objects of analysis as hepatic function analysis group such as GOT, GPT and the like, kidney function analysis group such as BUN, CRNN, UA and the like, or electrolyte analysis group.

In this case, a particular of the grouped items which can be analyzed by the starting IC card 11 is indicated together with a sequential No. on the left side of a display portion, as shown in Fig. 14, of a display unit 90 of the automatic analyzer A, and an analysis group No. and a particular of examination of the analysis group are indicated on the right side of the display portion. The sequential No. refers to a machine serial number of the sample cell 2, and the sequential No. of the sample cells (20 cells in the illustrated embodiment) set on the automatic analyzer A is indicated vertically. The sequential No. will be selected by turning on a suitable switch in the switch group 13. On the other hand, the analysis group No. and the particular of examination of the analysis group indicate which switch of the switch group 13 indicates "what" analysis No., i.e. for example, "1" indicates the hepatic function examination group, "3" indicates the kidney function examination group and so forth.

Accordingly, if the switch "3" of the switch group 13 is turned on for the sample of sequential No. 2, then the selected analysis item No. "3" is indicated by the sequential No. "2" of the display portion.

Then, after selection of the analysis item to all the sequential Nos. is over and the ensuring work is completed therefor, a start switch 93 is turned on. When the start switch 93 is turned on, each mechanism of an analyzing portion V operates for a predetermined analyzing work according to a control signal selected by the switch group 13, the analysis data is sent to CPU, printed out on the printer 19 thereafter, and is inputted to the memory IC card 120 to storage through the reader/writer 121.

Then, operation data read by the reader/writer 121 and operation procedure of the switch group 13 are inputted minutely to the memory IC card 120, and the construction is such that the stored data cannot be fetched normally from within the reader/writer 121 disposed in the automatic analyzer A by those other than a particular person (maintenance personnel, for example).

The reader/writer units 12, 121 are constructed similarly to a known card reader/writer, which are exemplified by the construction comprising providing a ready access terminal for outputting control signals to the memory IC card 120 and others and another ready access terminal for inputting and outputting operation data and operation procedure of the switch group 13 to the starting IC card 11 and others, disposing reader pack, IC card transmitting/receiving circuit, arithmetic operation part and light source in the interior, which are not so illustrated.

The reader/writer units 12, 121 constructed as above operate for reading optically operation data inputted to the starting IC card 11 and the memory IC card 120, setting the switch group 13 of the automatic analyzer A to a state ready for use according to the read data, inputting measuring data obtained through the optical measuring device 7 and operation procedure of the switch group 13 to the starting IC card 11 and the memory IC card 120.

The automatic analyzer A relating to the embodiment is set to on (ready) state only in case the starting IC card 11 and the memory IC card 120 are set normally on the reader/writer units 12, 121 respectively, leaving off the subswitch (not indicated) only which is an actuating switch of the switch group 13. The subswitch is that for setting the switch group 13 to a ready state only when the starting IC card 11 and the memory IC card 120 are set at predetermined positions of the reader/writer units 12, 121, further the operation data read by the reader/writer units 12, 121 is decided proper, and inputted to the memory IC card 120 to storage.

A function will be described in the above-described construction.

First, when the starting IC card 11 with a predetermined operation data inputted therein is inserted in the reader/writer 12 through a corresponding card insertion port, the reader/writer 12 irradiates a light to a power pack of the starting IC card 11 from the light source, thereby generating an electromotive force on the card power pack. Thus the starting IC card 11 produces a driving voltage from the electromotive force, and all the circuit parts in the starting IC card 11 are set to a ready state.

Then, a starting data stored in the aforementioned storage feeds an oscillation signal generated from an oscillator of the reader/writer 12 to a predetermined light receiving element of the starting IC card 11, and thus CPU of the starting IC card 11 is actuated to read out the operation data of the data storage. The data read by CPU is converted into an optical signal by the predetermined light receiving element and sent to the reader/writer 12. The data sent to the reader/writer 12 is subjected to a necessary data processing at the reader/writer 12, the reader/writer 12 then generates an on actuation signal of the switch group 13 to the subswitch, and the operation data is inputted to the memory IC card 120 set on the reader/writer 121.

On the other hand, when the switch group 13 is set to a ready state by the starting IC card 11, the operator will manipulate the switch group 13 to input desired analysis conditions and others, and the automatic analyzer A operates for predetermined analysis processing according to the inputted operation procedure, however, the operation procedure by the switch group 13 is also inputted automatically in sequence to the memory IC card 120 through the reader/writer 121.

Accordingly, if a fault arises on the automatic analyzer A, the maintenance personnel will set the memory IC card 120 extracted from within the reader/writer 121 to a predetermined reader installed in another place, dump the data inputted within the memory IC card 120 to CRT, printer and others to read, thus finding the cause of fault of the automatic analyzer A easily and quickly.

Next, from actuating the start switch 93, the sample cassette 30 moves each sample cell 2 to the sucking position f, and a work for sucking the sample is carried out by the sampling pipet 3 at the sample sucking position f. The sampling pipet 3 is turned thereafter and pours the sample sucked in the reaction cell 1 for necessary quantity.

When the above work is over, the reaction cell 1 turns 35 pitches counterclockwise in Fig. 2 and stops, and then the reaction cell 1 is moved intermittently at every pitch clockwise in Fig. 2. Thus the reaction cell 1 repeats an operation to turn 35 pitches counterclockwise in Fig. 2 at every pouring of the sample or at every 20 seconds and then stop.

When the reaction cell 1 arrives at the first reagent pouring position b on the reaction cell moving device, the reagent table 40 is controlled for rotation synchronously therewith, the reagent bottle 9a containing a first reagent corresponding to the measuring item is moved to the reagent sucking position g, the first reagent is thus sucked in necessary quantity and poured into the reaction cell 1 having arrived at the first reagent pouring position b.

After that, the reaction cell 1 is moved to the second reagent pouring/stirring position c, the reagent table 40 is controlled for rotation in concert therewith, the reagent bottle 9b containing a second reagent corresponding to the measuring item is moved to the second reagent sucking position h, a necessary quantity of the second reagent is sucked at the position h by the second reagent pipet 5, poured into the reaction cell 1, and is then bubbled by the stirring device.

Next, the aforementioned reaction cell 1 is moved successively by the reaction cell moving device B, crosses a luminous flux of the optical measuring device 7 at every 35-pitch rotations counterclockwise in Fig. 2, thus a predetermined optical measurement corresponding to the measuring item is carried out, thereby obtaining a reaction time course of each reaction cell 1.

The reaction cell 1 for which the optical measuring work is over as described is then moved to the washing device 8, and after a predetermined washing is performed therefor, it is again moved to the sample pouring position a.

The analysis value obtained as above is subjected to a data processing on CPU, printed out to the printer 19, and is then inputted to the memory IC card 120. Then, in case the analysis processing is suspended on the way, a stop switch 94 is turned on, and when using the next starting IC card 11, a reset switch 95 is turned on.

Then, in the above-described embodiment, the case where a contactless optical card is applied for the IC card is exemplified for description, however, the invention is not necessarily limited thereto, and an IC card of contact system, for example, can also be used.

Further, in the embodiment described above, the case where one group is selected from among a plurality of analysis groups by an item switch 14 is exemplified, however, a single item such as GOT, GPT, ZTT or the like only may be selected otherwise.

Still further, the invention may be constructed otherwise that the automatic analyzer may be controlled and the measuring data may also be stored by an IC card or magnetic card of large capacity instead of inputting operator's information and control signals and storing measuring data all by two IC cards.

### INDUSTRIAL APPLICABILITY

As described in detail above, according to the invention, a desired analysis item can be selected by IC card, and an item corresponding to the sample can be selected by operating switches on/off accordingly, and hence the operation is extremely simplified, the system can generally be constructed simply and compactedly as well, a simple automatic analyzer troubleless and moderate in cost can thus be provided, therefore an automatic analyzer complying with requirements of hospitals and clinics can be provided at a low cost.

## Claims

1. An automatic analyzer, comprising a means (30) for moving a plurality of sample containers (2) to a sample sucking position (f), a means for sucking a necessary quantity of sample at the sample sucking position (f) and pouring it dividedly into a reaction cell (1), a means (B) for moving the reaction cell (1) to an optical measuring position (d), a means (4, 5) for pouring a reagent corresponding to a measuring item dividedly into said reaction cell (1), a means (10, 40) for moving a reagent cell (9) containing the reagent corresponding to the measuring item therein to a reagent sucking position (g, h), a means (7) for measuring a sample in the reaction cell (1) optically, a means (8) for washing the reaction cell for which a measurement is over, **characterized** by
a control device (CPU), adapted to control the drive of the aforementioned means corresponding to a desired analysis on the respective samples in the respective reaction cells,
an initiating IC card processing means (12) for reading the data of a predetermined analysis operation for a particular sample to be analyzed which have been stored on an initiating IC card (11) which is insertable into said initiating IC card processing means (12);
a memory IC card processing means (121) for recording data on a memory IC card (120) which is insertable into said memory IC card processing means;
said initiating IC card processing means (12) being connected to said control device (CPU) and to said memory IC card processing means (121) for recording the data of the predetermined analysis operation on said memory IC card (120); and
said memory IC card processing means (121) further being connected to said control device (CPU) and said optical measuring means (7) for recording the data of the actual analysis operation carried out by said analyzer and the results of the optical measurements on the same memory IC card (120).

2. The automatic analyzer as defined in claim 1, wherein informations comprising a signal necessary for actuating the automatic analyzer and a coded information such as operator's name, registration No., office or post and so forth are stored on the initiating IC card.

3. The automatic analyzer as defined in claims 1 or 2, wherein a starting command signal and a memory part are formed in said initiating IC card.

4. The automatic analyzer as defined in claim 1, 2 or 3, wherein a thermostat (60) comprises a plurality of heating members (64), wherein the heating temperature in the thermostatic oven is controlled uniformly by controlling each heating member (64) individually for temperature by a temperature control device (65).

5. The automatic analyzer as defined in claim 1, 2, 3 or 4, further comprising a rotatable table holding the reaction cells (1) and adapted to move a particular cell from a starting position through a substantially complete rotation of said table to a position spaced one cell position in the direction opposite the direction of rotation of said table from the starting position, whereby as successive rotations of the table are carried out, the cells progressively move one cell position at a time in a direction opposite the direction of rotation of said table.

## Patentansprüche

1. Automatischer Analysator mit einer Einrichtung (30) zum Bewegen einer Vielzahl Probenbehälter (2) in einer Probenansaugposition (f), einer Einrichtung zum Ansaugen einer erforderlichen Menge der Probe in der Probenansaugposition (f) und zum getrennten Einbringen in eine Reaktionszelle (1), einer Einrichtung (B) zum Bewegen der Reaktionszelle (1) in eine optische Meßposition (d), einer Einrichtung (4, 5) zum getrennten Einbringen eines Reagenzes, das einem Meßvorgang entspricht, in die Reaktionszelle (1), einer Einrichtung (10, 40) zum Bewegen einer Reaktionszelle (9), die das dem Meßvorgang entsprechende Reagenz enthält, in eine Reagenzansaugposition (g, h), einer Einrichtung (7) zum optischen Messen einer Probe in der Reaktionszelle (1), einer Einrichtung (8) zum Waschen der Reaktionszelle, für die die Messung durchgeführt wurde,
**gekennzeichnet** durch
eine Steuereinrichtung (CPU), die zur Steuerung des Antriebs der vorgenannten Einrichtungen entsprechend einer erwünschten Analyse an den entsprechenden Proben in den entsprechenden Reaktionszellen ausgelegt ist,
einer Initialisierung-IC-Kartenverarbeitungseinrichtung (12), zum Lesen der Daten eines vorgegebenen Analysenbetriebs für eine spezielle Probe, die zu analysieren ist, die auf einer Initialisierungs-IC-Karte (11) gespeichert sind, die in die Initialisierungs-IC-Kartenverarbeitungseinrichtung (12) einbringbar ist,
einer Speicher-IC-Kartenverarbeitungseinrichtung (121), zum Aufzeichnen von Daten auf einer Speicher-IC-Karte (120), die in die Speicher-IC-Kartenverarbeitungseinrichtung einbringbar ist,
wobei die Initialisierungs-IC-Kartenverarbeitungseinrichtung (12) mit der Steuereinrichtung (CPU) und mit der Speicher-IC-Kartenverarbeitungseinrichtung (121) zum Aufzeichnen der Daten des vorgegebenen Analysebetriebs auf der Speicher-IC-Karte (120) verbunden ist, und
wobei die Speicher-IC-Kartenverarbeitungseinrichtung (121) ferner mit der Steuereinrichtung (CPU) und der optischen Meßeinrichtung (7) verbunden ist zum Aufzeichnen der Daten des momentan durch den Analysator durchgeführten Analysebetriebs und der Resultate der optischen Messungen auf derselben Speicher-IC-Karte (120).

2. Automatischer Analysator nach Anspruch 1, wobei Informationen hinsichtlich eines Signals, das für die Betätigung des automatischen Analysators erforderlich ist, und eine kodierte Information wie der Name der Bedienungsperson, eine Registriernummer, Büro- oder Post usw. auf der Initialisierungs-IC-Karte gespeichert sind.

3. Automatischer Analysator nach Anspruch 1 oder 2, wobei ein Startbefehlssignal und ein Speicherteil in der Initialisierungs-IC-Karte ausgebildet sind.

4. Automatischer Analysator nach Anspruch 1, 2 oder 3, wobei ein Thermostat (60) eine Mehrzahl von Heizelementen (64) aufweist, wobei die Heiztemperatur im Thermostatofen gleichförmig durch Steuerung jedes Heizelementes (64) individuell hinsichtlich der Temperatur durch eine Temperatur-Steuervorrichtung (65) erfolgt.

5. Automatischer Analysator nach Anspruch 1, 2, 3 oder 4, mit ferner einem drehbaren Tisch, der die Reaktionszellen (1) trägt und ausgelegt ist zum Bewegen einer speziellen Zelle von einer Startposition durch eine im wesentlichen vollständige Drehung des Tisches in eine Position, die eine Zellenposition in Richtung entgegengesetzt der Drehung des Tisches von der Startposition ausgehend versetzt ist, wodurch, wenn aufeinanderfolgende Drehungen des Tisches durchgeführt werden, die Zellen nach und nach um jeweils eine Zellenposition in eine Richtung entgegengesetzt der Drehrichtung des Tisches bewegt werden.

## Revendications

1. Analyseur automatique, comprenant des moyens (30) pour amener plusieurs conteneurs d'échantillon (2) à une position d'aspiration d'échantillon (f), des moyens pour aspirer une quantité nécessaire d'échantillon à la position d'aspiration d'échantillon (f) et la verser de manière divisée dans une cellule à réaction (1), des moyens (B) pour déplacer la cellule à réaction (1) pour l'amener à une position de mesure optique (d), des moyens (4, 5) pour verser un réactif correspondant à une caractéristique à mesurer, de manière divisible, dans ladite cellule à réaction (1), des moyens (10, 40) pour amener une cellule à réactif (9) contenant le réactif correspondant à la caractéristique à mesurer à une position d'aspiration de réactif (g, h), des moyens (7) pour mesurer optiquement un échantillon dans la cellule à réaction (1), des moyens (8) pour laver la cellule à réaction pour laquelle une mesure est terminée, caractérisé en ce qu'il comporte :
- un dispositif de commande (unité centrale de traitement) adapté pour commander l'entraînement des moyens précités correspondant à une analyse désirée sur les échantillons respectifs dans les cellules à réaction respectives;
- des moyens de traitement à carte à circuit intégré de mise en marche (12) pour lire les données d'une opération d'analyse prédéterminée pour un échantillon particulier à analyser qui ont été mémorisées sur une carte à circuit intégré de mise en marche (11) qui peut être introduite dans lesdits moyens de traitement à carte à circuit intégré de mise en marche (12);
- des moyens de traitement à carte à circuit intégré de mémoire (121) pour enregistrer des données sur une carte à circuit intégré de mémoire (120) qui peut être introduite dans lesdits moyens de traitement à carte à circuit intégré de mémoire,
lesdits moyens de mise en marche à carte à circuit intégré de mémoire (12) étant reliés audit dispositif de commande (unité centrale de traitement) et auxdits moyens de traitement à carte à circuit intégré de mémoire (121) pour enregistrer les données de l'opération d'analyse prédéterminée sur ladite carte à circuit intégré de mémoire (120); et
lesdits moyens de traitement à carte à circuit intégré de mémoire étant en outre reliés audit dispositif de commande (unité centrale de traitement) et auxdits moyens de mesure optique (7) pour enregistrer les données de l'opération d'analyse actuelle exécutée par ledit analyseur et les résultats des mesures optiques sur la même carte à circuit intégré de mémoire (120).

2. Analyseur automatique selon la revendication 1, dans lequel des informations comprenant un signal nécessaire pour actionner l'analyseur automatique, et des informations codées telle que le nom de l'opérateur, le numéro d'enregistrement, le bureau ou le poste de travail, etc. sont enregistrées sur la carte à circuit intégré de mise en marche.

3. Analyseur automatique selon la revendication 1 ou 2, dans lequel un signal de commande de mise en marche et une partie formant mémoire sont formés dans ladite carte à circuit intégré de mise en marche.

4. Analyseur automatique selon la revendication 1, 2 ou 3, dans lequel un thermostat (60) comprend une pluralité d'éléments chauffants (64), et dans lequel la température de chauffage dans l'enceinte thermostatée est commandée uniformément en commandant individuellement en température chaque organe chauffant (64) par un dispositif de commande de température (65).

5. Analyseur automatique selon l'une des revendications précédentes, comprenant en outre un plateau tournant portant les cellules à réaction (1) et adapté pour déplacer une cellule d'une position de départ, par une rotation sensiblement complète de ladite table, à une position espacée d'une position de cellule dans le sens opposé au sens de rotation dudit plateau à partir de la position de départ, grâce à quoi, au fur et à mesure que des rotations successives de la table sont effectuées, les cellules se déplacent progressivement d'une position de cellule à la fois dans le sens opposé au sens de rotation de ladite table.
